# NEW EUROPEAN PATENT SPECIFICATION

(11) **EP 1 268 196 B2**
(45) Date of publication and mention of the opposition decision: **30.09.2009**
(45) Mention of the grant of the patent: 22.09.2004
(21) Application number: 01920860.2
(22) Date of filing: 29.03.2001
(51) Int. Cl.: B32B 17/10, C03C 27/12, B29C 47/00

(54) **GLASS/POLYVINYLBUTYRAL LAMINATES HAVING DIRECTIONAL SURFACE PATTERNS AND A PROCESS FOR PREPARING SAME**
GLAS/POLYVINYLBUTYRAL LAMINAT MIT GERICHTETEN OBERFLÄCHENSTRKTUREN UND VERFAHREN ZU IHRER HERSTELLUNG
STRATIFIES DE POLYVINYLBUTYRAL/VERRE POSSEDANT DES MOTIFS A SURFACE DIRECTIONNELLE ET LEUR PROCEDE DE PREPARATION

(30) Priority: 29.03.2000 US 193039 P
(43) Date of publication of application: 02.01.2003
(73) Proprietor: E.I. DU PONT DE NEMOURS AND COMPANY, Wilmington, DE 19898 (US)
(72) Inventor: CHOI, Chul, Won, Ulsan (KR); LEE,Sang,Gyu Apartment 2414-803, Iishin-Geonyoung, Goyang-Si, Kyungki-Do Seoul (KR)
(74) Representative: Morf, Jan Stefan
(86) International application number: PCT/US2001/010023
(87) International publication number: WO 2001/072510

(56) References cited:
- EP-A- 0 211 819
- EP-A- 0 215 976
- EP-A- 0 390 578
- US-A- 3 994 654
- US-A- 5 151 234
- 'extrusionswerkzeuge für kunststoffe und kautschuk', 1991, HANSER, MÜNCHEN, ISBN 3-446-15637-2 article WALTER, MICHAELI: 'bauarten, gestaltung und berechnungsmöglichkeiten'
- 'vdi-wärmeatlas', vol. 6.AUFL., 1991, VDI-VERLAG GMBH, DÜSSELDORF article 'stoffwerte von wasser', page DB7

## Description

### BACKGROUND OF THE INVENTION

### Field of the Invention

The present invention relates to glass laminates. The present invention particularly relates to laminates of glass and polyvinylbutyral, and a process of preparing same.

### Description of Related Art

Glass laminates that include plasticized polyvinyl butyral (PVB) interlayers can be used in various applications, including use in automotive safety glass applications such as windshields and side glass; in architectural applications such as windows, doors and/or building panels; and in various other applications such as in display cases, as shelving, and the like.

Glass/PVB laminates can be prepared by conventional methods. Typically, a laminate can be prepared by first positioning a sheet of PVB between two pieces of glass to obtain an assembly, and trimming the excess PVB interlayer. A "pre-press" is obtained from the assembly by removing air trapped between the glass and the interlayer, and then sealing the edges. A conventional method for edge sealing requires placing the assembly inside of a rubber bag and removing the air from the bag by applying vacuum. The rubber bag and contents can then be passed through a furnace wherein the temperature is increased to 135° C in order to obtain the pre-press. A pre-press so obtained can be heated in an autoclave wherein heat and pressure are applied, residual air is dissolved in the PVB interlayer, and bonding occurs between the interlayer and the surface being laminated.

An interlayer having a smooth surface can present problems during the assembly and de-airing steps of a lamination process if a vacuum bag system is used to make the pre-press. In the assembly step, the smooth pattern allows the interlayer to tack too easily to the glass, making placement of the interlayer difficult. In the de-airing step, a smooth pattern can lead to a laminate having trapped air, and flaws in the laminate can result therefrom. It is known that interlayers having a rough surface can facilitate de-airing. Rough surface patterns can be generated by conventional methods, including use of an embossing tool to impart a reproducible pattern on the surface of the interlayer material. It is also conventional to generate a randomly irregular surface pattern by a melt-fracture process, which can provide channels by which air can escape during the lamination process.

In a typical windshield laminating process, the PVB interlayer is first subjected to a shaping step wherein the PVB interlayer is differentially stretched such that the shaped interlayer better conforms to the curvature of the vehicle for which the windshield is designed. In the shaping step, the PVB roll is unwound, and the interlayer is heated to approximately 100°C and then passed over one or more cones which are smooth, and then chilled to approximately 10°C for storage, and then cut into blanks slightly larger than the size of the windshield. Stresses incurred in the shaping process are partially relaxed as the blanks are conditioned at 10°C. During the shaping step, some of the pattern roughness is pressed out temporarily, but will recover according to stress relaxation kinetics well known in the art of polymer rheology.

For interlayers with surface patterns generated in a melt-fracture process, haze in a pre-press can be a problem, especially if the interlayer material is used within twelve hours of being shaped for lamination in a vacuum bag pre-pressing system. Pre-presses with less than 15% light transmission are typically rejected. Use of an embossing tool can be effective in resolving the de-airing and pre-press clarity concerns, but is more costly and more work intensive than use of a melt fracture process. An embossing process is inflexible relative to the melt fracture process, with respect to producing different patterns on the same equipment.

While use of rough patterns obtained by a melt-fracture process could improve the effectiveness of de-airing by vacuum, rough patterns generated by melt fracture require more energy to melt down in the heating step. This could render the pre-press hazier than if it had been made from a smoother interlayer. In a conventional process for making flat laminates, a glass/PVB/glass assembly is typically heated to the point where the PVB attains a temperature of 50-90°C. At this temperature, the entire assembly is passed through a set of nip rolls, and the nip rolls exert pressure that squeezes out the interstitial air and also seals the edges of the pre-press. Pre-presses that use conventional PVB with a roughened surface obtained by a melt fracture process tend to be hazy if R_{z} is above 30 micrometers.

It is desirable to obtain an interlayer material with a surface rough enough to minimize haze in a pre-press, yet maintain a desirable balance of physical properties of the interlayer, without requiring the capital investment, loss of yield, loss of flexibility, or possible contamination that can result from use of an embossing tool. Therefore it can be desirable to obtain such a rough surface without use of an embossing tool.

EP-A-0211819 relates to plasticized polyvinyl butyral (PVB) sheet usable in laminated safety glass assemblies, particularly to a method of regulating the surface roughness of such a sheet. This is achieved by tailoring the molecular weight distribution of the PVB to provide a desired level of roughness in the extruded PVB sheet by selectively lightly cross-linking the PVB during its synthesis.

EP-A-0215976 discloses an interlayer for a laminated glass, said interlayer being composed of a film or sheet of a thermoplastic resin. One surface of the film or sheet of a thermoplastic resin has numerous coarse raised and depressed portions and numerous fine raised and depressed portions existing on the surfaces of the coarse raised and depressed portions.

EP-A-0390578 discloses extruded thermoplastic resin sheets with embossed surfaces.

### SUMMARY OF THE INVENTION

In one aspect, the present invention is a plasticized polyvinyl butyral sheet having a directional surface pattern created using a melt fracture process during extrusion of the sheet, as specified in claim 1, and wherein the directional surface pattern is a herringbone pattern, obtainable by using a die pressure of < 37 kg/cm².

In another aspect, the present invention is a process for creating a directional pattern on a surface of a plasticized polyvinyl butyral sheet using a melt fracture process during extrusion of the sheet, as specified in claim 6.

In still another aspect, the present invention is a laminate comprising a plasticized polyvinyl butyral interlayer, wherein the interlayer is obtained from a polyvinyl butyral sheet having a directional surface pattern created using a melt fracture process during extrusion of the sheet, as specified in claim 7.

### DETAILED DESCRIPTION

In one embodiment, the present invention is a plasticized polyvinyl butyral (PVB) sheet having a roughened surface wherein the surface has directionality imparted by a melt fracture extrusion process. PVB sheeting of the present invention is plasticized. Conventional plasticizers known in the art of preparing PVB sheets can be used in the practice of the present invention. Such plasticizers include, but are not limited to: triethylene glycol-di-2-ethyl butyrate; triethylene glycol-di-2-ethyl hexanoate; and dibutyl sebacate.

The roughness of the surface of a PVB sheet of the present invention is such that haze in a glass/PVB pre-press is low even if the PVB is used within 12 hours after it is stretched. Surface roughness can be measured by conventional methods, and can be expressed by the term R_{z}. In a washboard PVB sheet, R_{z} is greater than 30 micrometers, as determined by ISO R468. Preferably a washboard pattern has a roughness of greater than 35, more preferably greater than 40 and most preferably from 35 to 100. In a herringbone pattern of the present invention, the R_{z} is less than 35, preferably less than 30, more preferably from 15 to 35, and most preferably from 20 to 30 micrometers. In a PVB sheet of the present invention, the rough surface has a directional pattern, and the rough directional pattern is obtained without use of an embossing tool.

In another embodiment, the present invention is a laminate comprising at least one layer of PVB and at least one layer of glass, wherein the PVB layer is obtained by an extrusion process wherein a roughened PVB surface having directionality is obtained without use of an embossing tool. The laminate is prepared according to conventional methods, wherein an assembly comprising at least one layer of PVB of the present invention is heated, and then de-aired under vacuum and at elevated temperature to form a pre-press. Alternatively, the laminate can be prepared by heating the assembly in an oven and then passing it through one or more pairs of nip rolls. The pre-press can be autoclaved according to conventional methods and conditions to yield a finished laminate article.

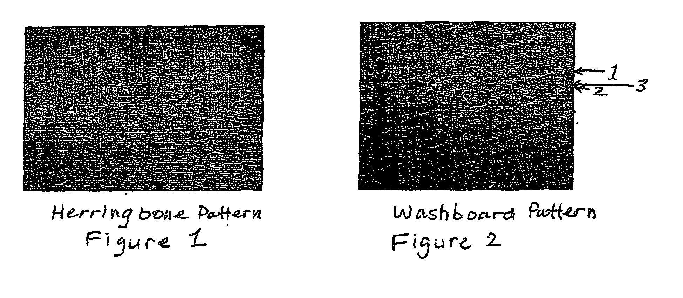

In still another embodiment, the present invention is a process for preparing a PVB sheet having a roughened surface having directionality imparted using a melt fracture extrusion process, without the aid of an embossing tool. The process comprises varying certain conditions and parameters in the extrusion process of PVB sheeting material. To prepare conventional PVB sheeting material, typically parameters can be varied to control surface pattern. Some parameters that can be varied are die body temperature and die gap, sheet caliper, lip stream pressure, lip gap, air gap, content of plasticizer, temperature of polymer, throughput of molten polymer per unit die width, and temperature of quench water. Other parameters can be varied as well. The directional patterns of the present invention can be obtained in the process of the present invention by varying the die pressure. Under certain die pressure operating conditions, a washboard pattern is one type of directional pattern that is obtained on the PVB surface. A washboard pattern is obtained by operating at a die pressure of greater than 58 kg/ cm² (5.69 MPa). A washboard pattern or surface, as the term is used herein, describes a surface having alternately high (1) and low (2) areas of elevation that form ridges (3), similar to the surface of a washboard. The ridges on a PVB surface of the present invention are nearly parallel to the cross-web direction of the interlayer as it is extruded, the cross-web direction being the direction perpendicular to that of the extrusion. Under certain other conditions of die pressure, a herringbone pattern is obtained on the PVB surface. A herringbone pattern is a second type of directional surface pattern that is obtained in the process of the present invention by varying process conditions. A herringbone pattern is obtained by varying die pressure such that the pressure is below 37 kg/cm² (3.63 MPa). The herringbone and washboard patterns are shown in Figure 1 and Figure 2, respectively. Other patterns can be obtained by varying process conditions, but the directional patterns of the present invention are controlled primarily by the die pressure.

Throughput (rate of polymer through the die)can be in the range of from 600 to 1000 kg per hr per meter, depending on the equipment being used.

### EXAMPLES

The Examples and comparative examples herein are included for illustrative purposes only, and are not intended to limit the scope of the present invention.
In Examples 1-25, 100 parts of dry PVB flake of nominally 18-23% by weight of un-butyralated vinyl alcohol groups were mixed with 35-40 parts of tetraethylene glycol di-n-heptanoate plasticizer and one or more light stabilizers marketed under the tradename " Tinuvin" by Ciba-Geigy Co. and an antioxidant which were premixed in the plasticizer continuously in a twin-screw extruder. The melt was forced through a slot die and formed a sheeting of 0.76 mm nominal thickness. In addition, agents for modifying surface energy of the bulk interlayer and usual adjuvants such as antioxidants, colorants and ultraviolet absorbers which do not adversely affect the functioning of the surface energy modifying agent and adhesion control agent can be included in the PVB composition. The melt at the die is at approximately 200-220°C. The lips of the die are heated by injecting pressurized steam into cavities therein. The lip temperature is controlled by the pressure of the steam injected. One of the die lips is adjustable so that as it opens, the back-pressure in the die is decreased and vice versa. The position of this lip is computer-controlled, and a desired back-pressure in the die (die pressure) is used as input.

PVB sheeting having washboard or herringbone pattern was prepared on conventional extrusion equipment by varying the condition of die pressure. The same equipment was used for all of the examples. The conditions and results are given in the Table below.

**Table**

| Ex. No. | Washboard (W) or Herringbone (H) or Random (R) | Die Pressure (kg/cm²) | Lip Steam Pressure (kg/cm²) | R_{z} (average) (micrometers) |
|---|---|---|---|---|
| 1 | W | 58.8 | 6.5 | 62.8 |
| 2 | H | 35.5 | 6.5 | 24.4 |
| 3 | H | 35.5 | 6.5 | 24.7 |
| 4 | H | 33.5 | 6.5 | 29.0 |
| 5 | H | 31.5 | 6.5 | 27.2 |
| 6 | H | 29.2 | 6.5 | 24.4 |
| 7 | H | 33.6 | 6.5 | 28.1 |
| 8 | H | 33.4 | 6.5 | 27.6 |
| 9 | H | 33.8 | 15 | 26.7 |
| 10 | H | 34.1 | 15 | 26.6 |
| 11 | H | 36.0 | 15 | 24.3 |
| 12 | R | 62.9 | 15 | 47.9 |
| 13 | R | 63.0 | 10 | 75.2 |
| 14 | W | 62.8 | 6.5 | 80.0 |
| 15 | W | 58.2 | 6.5 | 54.5 |
| 16 | W | 58.4 | 6.5 | 63.9 |
| 17 | W | 59.3 | 6.5 | 60.5 |
| 18 | W | 58.5 | 6.5 | 65.1 |
| 19 | W | 58.7 | 6.5 | 60.2 |
| 20 | W | 58.6 | 6.5 | 65.1 |
| 21 | W | 58.7 | 6.5 | 66.5 |
| 22 | W | 60.3 | 6.5 | 73.3 |
| 23 | W | 60.0 | 6.5 | 70.9 |
| 24 | W | 58.4 | 6.5 | 59.8 |
| 25 | W | 60.1 | 6.5 | 81.9 |

Comparative Example 26. Twenty full size windshields were prepared using a PVB interlayer commercially available from DuPont under the trade name Butacite®BE-1120 with a random surface pattern generated by melt fracture. The die pressure used was 62.9 kg/cm² (61.7 MPa), lip steam pressure was 15 kg/cm² (1.47 MPa). The roughness in terms of Rz was 47.9 micrometers, but there was no directionality. The interlayer was shaped using typical shaping equipment, and.the shaped interlayer was allowed to recover at 15°C for 4 hours. The pre-presses were prepared using a commercial vacuum-bag system with approximately 5 minutes of vacuum at ambient temperature, and 10 minutes inside an oven in which the PVB temperature gradually rose to 100°C at the end of that period. Ten of the pre-presses were very hazy, and were judged to be unusable (50% yield).
Comparative Example 27. Another twenty full size windshields were made of the same interlayer as in Comparative Example 26 except that the shaped interlayers had 8 hours of recovery after shaping. Five of the pre-presses were judged unusable (75% yield). This example shows that longer recovery time improves pre-press yield.
Example 28. Twenty windshields were prepared using the procedure in Comparative Example 26, except that the interlayer had washboard pattern, and Rz was 62.8 micrometer. It was made with die pressure of 58.8 kg/cm2 (5.75 MPa) and lip steam pressure of 6.5 kg/cm² (0.64 MPa). The interlayer had 4 hours of recovery time after shaping before it was assembled. One of the twenty pre-presses was judged unusable (95% yield). The pre-press yield was much higher than that in Comparative Example 26 although the sheeting was rougher, leading one skilled in the art to suspect that the pre-press would be hazier.
Example 29. Twenty windshields were prepared as in Example 28, except that the interlayer had 8 hours of recovery time after shaping before it was assembled. None of the twenty windshields was judged unusable (100% yield).

## Claims

1. A polyvinyl butyral (PVB) sheet having a roughened directional surface pattern obtainable by a melt fracture extrusion process without the use of an embossing tool, **characterised In that** the roughened directional surface pattern is a herringbone pattern, wherein the herringbone pattern is obtainable by using a die pressure of less than 37 kg/cm².

2. The sheet of Claim 1 having an R_{z} of less than 35.

3. The sheet of Claim 1 having an R_{z} of less than 30.

4. The sheet of Claim 1 having an R_{z} of from 15 to 35.

5. The sheet of Claim 1 having an R_{z} of from 20 to 30.

6. A process for creating a directional pattern on a surface of a polyvinyl butyral sheet comprising the step: extruding molten PVB using a melt fracture extrusion process, wherein the pattern can be varied by varying the extrusion process parameters and wherein an embossing tool is not used, **characterised in that** the directional pattern is a herringbone or washboard pattern,
wherein the washboard pattern is created using a die pressure of greater than 58 kg/cm², and
wherein the herringbone pattern is created using a die pressure of less than 37 kg/cm².

7. A laminate comprising a polyvinyl butyral interlayer, wherein the interlayer is obtained from a polyvinyl butyral sheet having a roughened directional surface pattern obtainable by extrusion of the sheet using a melt fracture process, **characterised in that** the roughened directional surface pattern is a herringbone pattern, wherein the herringbone pattern is obtainable by using a die pressure of less than 37 kg/cm².

8. The laminate of Claim 7 wherein at least one layer is glass adhered to the PVB layer

9. The laminate of Claim 8 wherein the PVB is adhered to at least two layers of glass.

10. The laminate of Claim 7 wherein at least one layer of an additional polymer is included in addition to the PVB.

11. An article obtained from a laminate of any of Claims 7-10.

12. The article of Claim 11 wherein the article is a windshield, or automotive side-glass.

13. The article of Claim 11 wherein the article is a window, shelf, or architectural glass.

14. The process of Claim 6 wherein the lip steam pressure is below 15 kg/cm² (1.47 MPa), for the creation of the herringbone pattern.

## Patentansprüche

1. Polyvinylbutyral(PVB)-Flächengebilde mit aufgerautem, richtungsorientiertem Oberflächenmuster, das mit Hilfe eines Prozesses der Schmelzbruchextrusion ohne die Verwendung eines Prägewerkzeuges erhalten werden kann, **dadurch gekennzeichnet, dass** das aufgeraute, richtungsorientierte Oberflächenmuster ein Fischgrätenmuster ist, wobei das Fischgrätenmuster unter Anwendung eines Düsendruckes kleiner als 37 kg/cm² erhalten werden kann.

2. Flächengebilde nach Anspruch 1 mit einem R_{z} -Wert kleiner als 35.

3. Flächengebilde nach Anspruch 1 mit einem R_{z} -Wert kleiner als 30.

4. Flächengebilde nach Anspruch 1 mit einem R_{z} -Wert von 15 bis 35.

5. Flächengebilde nach Anspruch 1 mit einem R_{z} -Wert von 20 bis 30.

6. Verfahren zum Erzeugen eines richtungsorientierten Musters auf einer Oberfläche aus einem Polyvinylbutyral-Flächengebilde, umfassend den Schritt: Extrudieren von schmelzflüssigem PVB unter Anwendung des Prozesses der Schmelzbruchextrusion, wobei das Muster variiert werden kann, indem die Prozessparameter der Extrusion variiert werden, und wobei kein Prägewerkzeug verwendet wird; **dadurch gekennzeichnet, dass** das richtungsorientierte Muster ein Fischgräten- oder Waschbrettmuster ist,
wobei das Waschbrettmuster unter Anwendung eines Düsendruckes größer als 58 kg/cm erzeugt wird, und
wobei das Fischgrätenmuster unter Anwendung eines Düsendruckes kleiner als 37 kg/cm² erzeugt wird.

7. Schichtstoff, aufweisend eine Polyvinylbutyral-Zwischenlage, wobei die Zwischenlage erhalten wird aus einem Polyvinylbutyral-Flächengebilde, das über ein aufgerautes, richtungsorientiertes Oberflächenmuster verfügt, das durch Extrusion des Flächengebildes unter Anwendung eines Schmelzbruchprozesses erhalten werden kann; **dadurch gekennzeichnet, dass** das aufgeraute, richtungsorientierte Oberflächenmuster ein Fischgrätenmuster ist, wobei das Fischgrätenmuster unter Anwendung eines Düsendruckes kleiner als 37 kg/cm² erhalten werden kann.

8. Schichtstoff nach Anspruch 7, wobei mindestens eine Lage aus Glas besteht, die an der PVB-Lage adhäriert ist.

9. Schichtstoff nach Anspruch 8, wobei das PVB an mindestens 2 Lagen aus Glas adhäriert ist.

10. Schichtstoff nach Anspruch 7, wobei zusätzlich zu dem PVB mindestens 1 Lage eines zusätzlichen Polymers einbezogen ist.

11. Artikel, der aus einem Schichtstoff nach einem der Ansprüche 7 bis 10 erhalten wird.

12. Artikel nach Anspruch 11, wobei der Artikel eine Windschutzscheibe oder ein Automobil-Seitenfenster ist.

13. Artikel nach Anspruch 11, wobei der Artikel eine Fensterscheibe, ein Regalplatten- oder Fassadenglas ist.

14. Verfahren nach Anspruch 6, wobei der Lippendampfdruck für das Erzeugen des Fischgrätenmusters kleiner ist als 15 kg/cm² (1,47 MPa).

## Revendications

1. Feuille de polyvinylbutyral (PVB) ayant un motif à surface directionnelle rugueuse que l'on peut obtenir par un procédé d'extrusion avec fracture de la masse fondue sans l'utilisation d'un poinçon, **caractérisée en ce que** le motif à surface directionnelle rugueuse est un motif à chevrons, le motif à chevrons étant obtenu en utilisant une pression de filière de moins de 37 kg/cm².

2. Feuille selon la revendication 1 ayant un R_{z} inférieur à 35.

3. Feuille selon la revendication 1 ayant un R_{z} inférieur à 30.

4. Feuille selon la revendication 1 ayant un R_{z} allant de 15 à 35.

5. Feuille selon la revendication 1 ayant un R_{z} de 20 à 30.

6. Procédé pour la création d'un motif directionnel sur une surface d'une feuille de polyvinylbutyral comprenant l'étape d'extrusion de PVB fondu en utilisant un procédé d'extrusion avec fracture de la masse fondue, où le motif peut varier en faisant varier les paramètres du procédé d'extrusion et où un poinçon n'est pas utilisé, **caractérisé en ce que** le motif directionnel est un motif à chevrons ou en vagues,
dans lequel le motif en vagues est créé en utilisant une pression de filière supérieure à 58 kg/cm², et
dans lequel le motif à chevrons est créé en utilisant une pression de filière inférieure à 37 kg/cm².

7. Stratifié comprenant une couche intermédiaire de polyvinylbutyral, dans lequel la couche intermédiaire est obtenue à partir d'une feuille de polyvinylbutyral ayant un motif à surface directionnelle rugueuse que l'on peut obtenir par extrusion de la feuille en utilisant un procédé de fracture de la masse fondue, **caractérisé en ce que** le motif à surface directionnelle rugueuse est un motif à chevrons, le motif à chevrons étant obtenu en utilisant une pression de filière inférieure à 37 kg/cm².

8. Stratifié selon la revendication 7, dans lequel au moins une couche est du verre collé à la couche de PVB.

9. Stratifié selon la revendication 8 dans lequel le PVB est collé au moins à deux couches de verre.

10. Stratifié selon la revendication 7 dans lequel au moins une couche d'un polymère supplémentaire est incluse en plus du PVB.

11. Article obtenu à partir d'un stratifié selon l'une quelconque des revendications 7 à 10.

12. Article selon la revendication 11 dans lequel l'article est un pare-brise ou une vitre latérale d'automobile.

13. Article selon la revendication 11 dans lequel l'article est une fenêtre, un plateau ou un verre architectural.

14. Procédé selon la revendication 6, dans lequel la tension de vapeur de lèvre est inférieure à 15 kg/cm² (1,47 MPa) pour la création du motif à chevrons.
